# EUROPEAN PATENT SPECIFICATION

(11) **EP 3 338 930 B1**
(45) Date of publication and mention of the grant of the patent: **17.06.2020**
(21) Application number: 16206561.9
(22) Date of filing: 23.12.2016
(51) Int. Cl.: B23C 5/10

(54) **A BALL NOSE END MILL INSERT, A BALL NOSE END MILL TOOL BODY AND A BALL NOSE END MILL**
SCHNEIDEINSATZ FÜR KUGELKOPFFRÄSER, KUGELKOPFFRÄSERWERKZEUGKÖRPER UND KUGELKOPFFRÄSER
PLAQUETTE DE COUPE POUR FRAISE À BOUT SPHÉRIQUE, CORPS D'OUTIL DE FRAISE À BOUT SPHÉRIQUE ET FRAISE À BOUT SPHÉRIQUE

(43) Date of publication of application: 27.06.2018
(73) Proprietor: WALTER AG, 72072 Tübingen (DE)
(72) Inventor: Jung, Alexander, DE-72127 Kusterdingen (DE)
(74) Representative: Sandvik

(56) References cited:
- EP-A1- 0 642 864
- JP-A- 2000 005 920
- JP-A- 2002 144 133
- JP-A- 2002 144 134
- JP-B2- 4 203 212
- JP-U- H05 309
- US-B2- 9 272 343

## Description

### TECHNICAL FIELD OF THE INVENTION

The present invention belongs to the technical field of metal cutting. More specifically the present invention belongs to the field of ball nose end mills having exchangeable ball nose end mill inserts used for metal cutting in machines such as computer numerical control, i.e. CNC, machines.

### BACKGROUND OF THE INVENTION AND PRIOR ART

The present invention relates to a ball nose end mill insert according to the preamble of claim 1, a ball nose end mill tool body according to the preamble of claim 14 and ball nose end mill comprising such a ball nose end mill insert and such a ball nose end mill tool body.

Such ball nose end mills are used for different types of milling operations, in which a form is generated in a workpiece by rotating the ball nose end mill around its center axis and feeding the ball nose end mill generally transverse to said center axis such that the ball nose end mill insert comes into material removing engagement with the workpiece. Ball nose end mills are particularly well suited for profile milling operations, i.e. milling operations in which concave and convex shapes in two and three dimensions are obtained. For example, ball nose end mills may be used for machining three-dimensional forms in dies and moulds and for providing radiused, arcuate or curved shapes in a workpiece.

JP 4203212 B2 discloses a ball nose end mill having a ball nose end mill insert and a ball nose end mill tool body of the type defined in the introduction. However, the disclosed ball nose end mill has a number of properties desired to be improved. For example, it is desirable to improve the positioning of the ball nose end mill insert in the ball nose end mill tool body, the fastening of the ball nose end mill insert in the ball nose end mill tool body as well as the capability of the ball nose end mill to withstand cutting forces when the ball nose end mill insert is received in the ball nose end mill tool body.

### SUMMARY OF THE INVENTION

A primary object of the present invention is to provide a ball nose end mill insert and a ball nose end mill tool body of the type defined in the introduction being improved in at least some aspect with respect to such ball nose end mill inserts and ball nose end mill tool bodies already known. A further object is to provide a ball nose end mill insert and a ball nose end mill tool body, which enable a more reliable and/or stable fastening of the ball nose end mill insert in the ball nose end mill tool body. Yet another object is to provide a ball nose end mill insert and a ball nose end mill tool body having improved properties with regard to withstanding the cutting forces, especially cutting forces transverse to the center axis of the ball nose end mill insert and the ball nose end mill tool body, during material removing machining. A further object is to provide a ball nose end mill insert and a ball nose end mill tool body obtaining a more accurate positioning of the ball nose end mill insert, when received by the ball nose end mill tool body. A still further object is to provide a ball nose end mill insert and a ball nose end mill tool body which can be manufactured in an economical way.

At least the primary object is obtained by providing such a ball nose end mill insert having the features listed in the characterizing part of appended claim 1 and by providing such a ball nose end mill tool body having the features listed in the characterizing part of appended claim 14.

Thanks to the axial insert support surface and the radial insert support surface together forming an acute angle, said axial insert support surface and said radial insert support surface will create a wedge-shaped formation, which is capable of receiving at least part of the cutting forces acting in a direction generally transverse to the center axis of the ball nose end mill insert during material removing machining, when such an insert is received in a correspondingly configured ball nose end mill tool body, i.e. a ball nose end mill tool body having an axial tool body support surface and a radial tool body support surface together forming an acute angle. In this way, the load on the fastener, used to fasten the ball nose end mill insert in the ball nose end mill tool body, is decreased. Thereby, the service life of a ball nose end mill comprising such a ball nose end mill insert is improved. This is not possible with a ball nose end mill insert as suggested and disclosed in JP 4203212 B2, since the axial insert support surface and the radial insert support surface are arranged at right angles, i.e. they together form 90°. Additionally, the wedge-shaped formation, created by the axial insert support surface and the radial insert support surface, enables a better positioning of the ball nose end mill insert in a correspondingly configured ball nose end mill tool body. When the ball nose end mill insert is received by the ball nose end mill tool body, the insert will more or less automatically fall into its designated place.

Furthermore, other prior art solutions, as for example illustrated in Fig. 6 and Fig. 7 of JP 4203212 B2, in which two insert support surfaces together form an obtuse angle, are associated with other problems. Due to the insert support surfaces together forming an obtuse angle, corresponding support surfaces of a ball nose end mill tool body also need to be arranged so as to form an obtuse angle. Such an arrangement in the ball nose end mill tool body is substantially more difficult to produce. By necessity, in order to produce the generally concave configuration of the ball nose end mill tool body having support surfaces forming an obtuse angle, smaller and/or more slender tools more prone to breakage have to be used, in order to reach all surfaces to be machined.

According to an embodiment of the invention said acute angle is no larger than 88°. This arrangement provides for sufficient support for withstanding cutting forces transverse to the axial center axis of the ball nose end mill insert. Also, for such acute angles a sufficiently improved positioning of the ball nose end mill insert is achieved when placing the ball nose end mill insert in the ball nose end mill tool body.

According to an embodiment of the invention said acute angle is no larger than 85°. This arrangement provides for further improved support for withstanding cutting forces transverse to the axial center axis of the ball nose end mill insert. Also, for such acute angles an even better positioning of the ball nose end mill insert is achieved when placing the ball nose end mill insert in the ball nose end mill tool body.

According to an embodiment of the invention said acute angle is at least 70°. Angles smaller than 70° are not preferred, since a ball nose end mill tool body for receiving such a ball nose end mill insert is more prone to detrimental wear.

According to an embodiment of the invention the axial insert support surface is a substantially flat surface. In this way, a uniform distribution of axial forces during operation is achieved.

According to an embodiment of the invention the axial insert support surface is a curved surface defining at least two separate contact areas. This arrangement provides an even more accurate positioning.

According to an embodiment of the invention said axial insert support surface is directly connected to said radial insert support surface, which simplifies manufacturing of the ball nose end mill insert.

According to an embodiment of the invention said axial insert support surface extends a major part of said insert support surface. In other words, the axial insert support surface is larger or extends longer than the radial support surface. Hereby, axial cutting forces acting on the ball nose end mill insert during operation can be distributed over a larger surface and thus wear caused by such axial cutting forces is decreased.

According to an embodiment of the invention said axial insert support surface extends from a first peripheral side surface to the radial insert support surface. This allows for simple and efficient production of the ball nose end mill insert.

According to an embodiment of the invention said radial insert support surface is parallel to said axial center axis. In this way an accurate positioning in the radial direction is obtained. Additionally, an advantageous radial support and capability to withstand cutting forces transverse to the center axis of the ball nose end mill insert is achieved.

According to an embodiment of the invention said peripheral surface comprises a transverse surface connecting said radial insert support surface and one of said peripheral side surfaces. This allows for simple and efficient production of the ball nose end mill insert.

According to an embodiment of the invention said insert support surface consists of said axial insert support surface and said radial insert support surface. This allows for simple and efficient production of the ball nose end mill insert.

The advantages as set forth above with reference to features of the ball nose end mill insert also apply for a ball nose end mill tool body and a ball nose end mill, respectively, having corresponding features and will not be repeated.

### DESCRIPTION OF THE DRAWINGS

The present invention will now be explained in more detail by a description of different embodiments of the invention and by reference to the accompanying drawings.
- Fig. 1: is a front view of a ball nose end mill according to a first embodiment.
- Fig. 2: is a side view of the ball nose end mill shown in Fig. 1 with the fastener outside the ball nose end mill.
- Fig. 3: is a partial front view corresponding to Fig. 1, but showing only the ball nose end mill tool body.
- Fig. 4: is a partial side view corresponding to Fig. 2, but showing only the ball nose end mill tool body.
- Fig. 5: is a cross-sectional view along the line IV-IV of the ball nose end mill tool body shown in Fig. 4.
- Fig. 6: is a front view of the ball nose end mill insert shown in Fig. 1.
- Fig. 7: is a perspective view of the ball nose end mill insert of Fig. 6.
- Fig. 8: is a top view of the ball nose end mill insert of Fig. 6.
- Fig. 9: is a cross-sectional view along the line II-II of the ball nose end mill insert and the ball nose end mill tool body shown in Fig. 2.

### DETAILED DESCRIPTION OF EMBODIMENTS OF THE INVENTION

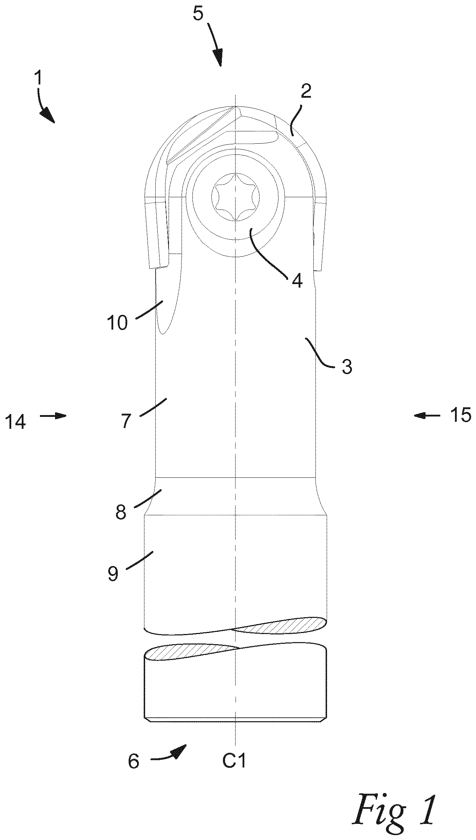

Reference is made to Fig. 1, which shows a front view of a metal cutting tool in the form of a ball nose end mill 1 for carrying out profile milling operations, i.e. material removing machining operations, according to a first embodiment. The ball nose end mill 1 comprises a ball nose end mill insert 2, a ball nose end mill tool body 3 and a fastener 4 for securing the ball nose end mill insert 2 in a designated position in the ball nose end mill tool body 3. Fig. 1 shows the ball nose end mill 1 in its assembled position. The ball nose end mill tool body 3 is typically made from one piece of a metal alloy. In the first embodiment the ball nose end mill tool body 3 is made of steel. The ball nose end mill insert 2 is made from a hard material, such as cemented carbide, which is harder than the material of the ball nose end mill tool body 3.

The ball nose end mill 1 has a generally elongate shape and is rotatable around an axial center axis C1 of the ball nose end mill 1. Said axial center axis C1 extends in a longitudinal direction of the ball nose end mill 1. The ball nose end mill 1 has an axially forward end portion 5, in which the ball nose end mill insert 2 is positioned, and an axially rearward end portion 6, at which the ball nose end mill tool body 3 is suitable to be coupled directly or indirectly, i.e. by a further extension body, to a machine tool such as a machine spindle of a CNC-machine not shown.

Thus, the ball nose end mill tool body 3 has a generally elongate shape and is rotatable around an axial center axis C3 of the ball nose end mill tool body 3.In the assembled position shown in Fig. 1, the tool body axial center axis C3 coincides with the axial center axis C1 of the ball nose end mill 1. Said tool body axial center axis C3 extends in a longitudinal direction of the ball nose end mill tool body 3. In the embodiment illustrated in Figs. 1-5, the ball nose end mill tool body 3 has a forward tool body section 7 of circular cylindrical basic shape, a rearward tool body section 9 circular cylindrical basic shape and an intermediate tool body section 8 having a conical-like, generally tapering shape, connecting the forward tool body section 7 and the rearward tool body section 9. The rearward tool body section 9 has a larger diameter than the diameter of the forward tool body section 7, whereas the diameter of the intermediate tool body section 8 decreases in the longitudinal direction from the rearward tool body section 9 to the forward tool body section 7. According to another embodiment, not shown, the ball nose end mill tool body 3 has a circular cylindrical shape and substantially constant diameter along the full length thereof.

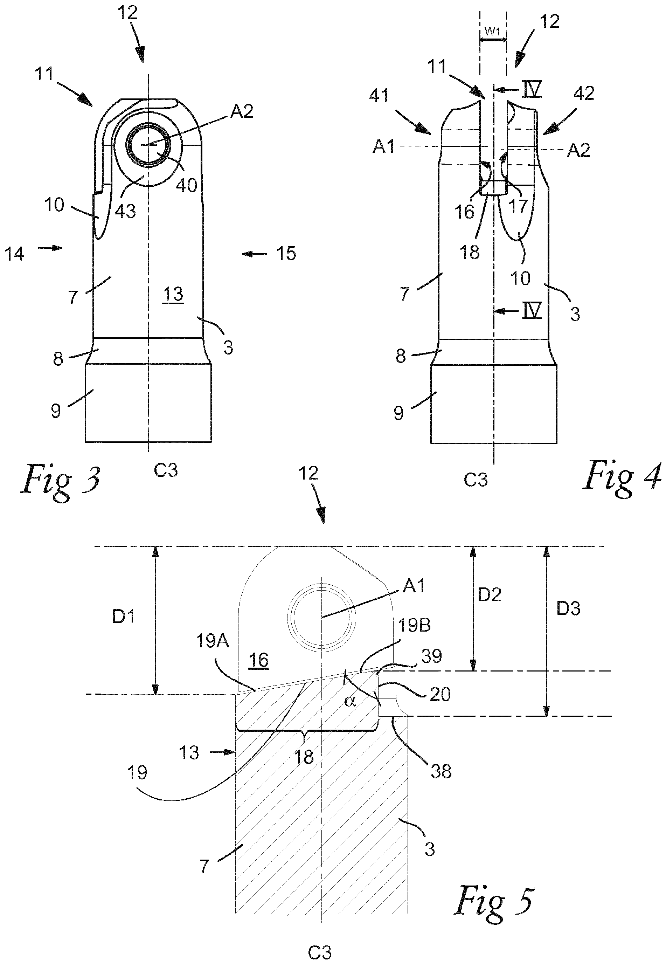

With reference to Fig. 3-4 the ball nose end mill tool body 3 comprises a slot 11 adapted to receive the ball nose end mill insert 2. The slot 11 is located in an axially forward end portion 5 of the ball nose end mill 1. Thus, the slot 11 is located in the forward tool body section 7. The slot 11 intersects a forward end portion 12 of the ball nose end mill tool body 3. This forward end portion 12 has a generally dome-shaped configuration with a truncated, flat forwardmost part. Further, the slot 11 intersects an envelope surface 13 of the tool body 3, i.e. the circular cylindrical envelope surface of the forward tool body section 7, on two opposite sides 14, 15 of the tool body axial center axis C3. In other words, and as illustrated in front view in Fig. 1 and Fig. 3, the slot 11 cuts through the forward part of the tool body 3 such that the envelope surface 13, i.e. the outer surface of the tool body 3, is intersected on the left side 14 of the tool body center axis C3 and on the right side 15 of the tool body center axis C3. According to the embodiment illustrated in Fig. 1-4 the forward tool body section 7 is provided with chip flow grooves 10 on opposite front and rear sides of the tool body axial center axis C3. The chip flow grooves 10 extend generally axially and lead up to the slot 11. The longitudinal extension of the chip flow grooves 10 is shorter than the axial extension of the forward tool body section 7.

Further, in side view as illustrated in Fig. 4, said slot 11 has a generally concave or U-shaped configuration. The slot 11 comprises two opposed substantially flat internal tool body side surfaces 16, 17 facing each other. More specifically, the slot 11 has a rear side surface 16, to the left of the tool body center axis C3 in Fig. 4, and a front side surface 17, to the right of the tool body center axis C3 as illustrated in Fig. 4. Further, the slot 11 comprises an axially rear tool body support surface 18, which interconnects the internal tool body side surfaces 16, 17 and is adapted to contact a corresponding insert support surface 30. Thus, the internal tool body side surfaces 16, 17 are located axially forward of said axially rear tool body support surface 18 and lead up to the forward end portion 12 of the tool body 3. As can also be seen in Fig 4, the slot 11 is centrally located in the ball nose end mill tool body 3, such that the internal tool body side surfaces 16, 17 of the slot 11 extend substantially in parallel with the tool body center axis C3 and that the rear tool body support surface 18 extends generally transverse to and intersects the tool body center axis C3. As shown in side view in Fig. 4, the rear tool body support surface 18 is intersected centrally, i.e. midway between the internal tool body side surfaces 16, 17, by the tool body center axis C3. The central arrangement of the slot 11 enables a well-balanced tool, when securing the ball nose end mill insert 2 in the slot 11. Further, in the shown embodiment, the width W1 of the slot, i.e. the distance in a direction perpendicular to the tool body center axis C3 between the internal tool body side surfaces 16, 17, is substantially constant. In the embodiment illustrated in Fig. 1-5 the width W1 is substantially constant in the axial direction as well as in a direction perpendicular to the tool body center axis C3 and parallel to the internal tool body side surfaces 16, 17. According to another embodiment, not shown, the slot 11 may widen towards the forward end portion 12 to facilitate insertion of the ball nose end mill insert 2.

Further, as illustrated in Fig. 3-5, the ball nose end mill tool body 3 comprises a transverse tool body through hole 40 adapted to receive the fastener 4 for fastening the insert 2 in the tool body 3. The tool body through hole 40 is adapted to be aligned with a through hole 37 of the ball nose end mill insert 2, thus allowing the fastener 4 to be received in said insert through hole 37 when fastening the insert 2. The tool body through hole 40 intersects the envelope surface 13 and the internal tool body side surfaces 16, 17. The tool body through hole 40 extends generally transverse to the tool body center axis C3. As illustrated in side view in Fig. 4, the tool body through hole 40 has a generally cylindrical shape and has a rear tool body through hole portion 41, defining a hole center axis A1, and a front tool body through hole portion 42 generally aligned with the rear tool body through hole portion 41, such that the axis A1 is also the center axis of the front tool body through hole portion 42. In the illustrated embodiment the hole center axis A1 is substantially perpendicular to the tool body center axis C3. The rear tool body through hole portion 41 intersects a rear part of the envelope surface 13 and the rear internal tool body side surface 16, whereas the front tool body through hole portion 42 intersects a forward part of the envelope surface 13 and the forward internal tool body side surface 17.

As can be seen in Fig. 1-2, according to this embodiment the fastener 4 is a fastening screw having a head portion 4A, an intermediate shank portion 4B and a threaded portion 4C. Upon fastening the ball nose end mill insert 2 in the slot 11, the male thread of the threaded portion 4C engages a female thread of the rear tool body through hole portion 41, the shank portion 4B extends through the insert through hole 37, while the head portion 4A contacts a countersunk portion 43 of the front tool body through hole portion 42. The countersunk portion 43 defines a center axis A2, which is substantially perpendicular to the tool body center axis C3.
As illustrated in Fig. 5, the tool body support surface 18 comprises an axial tool body support surface 19 and a radial tool body support surface 20. The axial tool body support surface 19 has surface portions 19A, 19B that, as seen in a longitudinal cross section along said slot 11, are located on opposite sides, i.e. both sides, of the axial center axis C3 of the tool body 3. More specifically, the axial tool body support surface 19 extends without interruption from the envelope surface 13, visible to the left in Fig. 5, all the way across the tool body axial center axis C3 to the radial tool body support surface 20, which is in its entirety located to the right of the tool body axial center axis C3 in Fig. 5. Accordingly, the axial tool body support surface 19 is directly connected to the radial tool body support surface 20, i.e. without any recesses, protrusions or other intermediate parts between these two tool body support surfaces 19, 20. According the illustrated embodiment the transition between the axial tool body support surface 19 and the radial tool body support surface 20 is a beveled portion 39 for decreasing wear due to repeated insert placement in the slot 11. According to another embodiment, not shown, this transition is a sharp edge. According to yet another embodiment, not shown, the transition is arcuate. The axial tool body support surface 19 and the radial tool body support surface 20 together form an acute angle a. According to one embodiment the acute angle α is no larger than 88°. According to another embodiment the acute angle α is no larger than 85°. According to another embodiment the acute angle α is at least 70°. In the embodiment illustrated in Fig. 1-5, the acute angle α is 80°.

The acute angle α can be achieved in different ways by suitably arranging the axial tool body support surface 19 and the radial tool body support surface 20 based on user requirements. In the embodiment illustrated in Fig. 1-5, the radial tool body support surface 20 is parallel to the axial center axis C3 of the tool body 3, whereas the axial tool body support surface 19 extends generally transverse to, but not perpendicular to, the tool body axial center axis C3. More specifically, the axial tool body support surface 19 is inclined in an axially forward direction from the envelope surface 13 to the radial tool body support surface 20. In other words, the axial distance D1 between the forward end portion 12 and the intersection between the axial tool body support surface 19 and the envelope surface 13 is larger than the axial distance D2 between the forward end portion 12 and the transition between the axial tool body support surface 19 and the radial tool body support surface 20. Thus, as a result of the acute angle α, the axial tool body support surface 19 and the radial tool body support surface 20 face away from each other. More specifically, and as illustrated in front view in Fig. 5, the axial tool body support surface 19 is facing upwards towards the left, whereas the radial tool body support surface 20 is facing towards the right.

Further, the axial tool body support surface 19 extends a major part of the tool body support surface 18. In other words, the area of the axial tool body support surface 19 is greater than the area of the remaining minor part of the tool body support surface 18. In the embodiment as illustrated in Fig.5, the tool body support surface 18 consists of the axial tool body support surface 19 and the radial tool body support surface 20. Accordingly, the area of the axial tool body support surface 19 is greater than the area of the radial tool body support surface 20. Further, as apparent from Fig.5, the extension of the axial tool body support surface 19 in a direction perpendicular to the tool body center axis C3 is greater than the extension of the radial tool body support surface 20 in a direction in parallel with the tool body center axis C3. Since the width W1 of the slot 11 is constant, the axial tool body support surface 19 has the width W1 and the radial tool body support surface 20 has the width W1, as seen in side view in Fig. 4. The slot 11 further comprises a transverse slot surface 38 connecting radial tool body support surface 20 and the envelope surface 13. The transverse slot surface 38 extends generally transverse to tool body center axis C3. As illustrated in Fig. 5 , the transverse slot surface 38 is located to the right of the tool body center axis C3 and on a level axially rear of, or below, the axial tool body surface 19 as well as the radial tool body surface 20. In other words, the axial distance D3 between the forward end portion 12 and the transverse slot surface 38 is larger than the axial distance D2 between the forward end portion 12 and the transition between the axial tool body support surface 19 and the radial tool body support surface 20. Also, the axial distance D3 between the forward end portion 12 and the transverse slot surface 38 is larger than the axial distance D1 between the forward end portion 12 and the intersection between the axial tool body support surface 19 and the envelope surface 13. Accordingly, the tool body support surface 18 and the transverse slot surface 38 form a bottom of the slot 11. As illustrated in Fig. 5, the tool body support surface 18 extends a major part of the forward tool body section 7 diameter, whereas the transverse slot surface 38 extends a minor part of the forward tool body section 7 diameter. According to the illustrated embodiment the tool body support surface 18 extends more than 80% of the tool body section 7 diameter and the transverse slot surface 38 extends less than 20% of the forward tool body section 7 diameter.

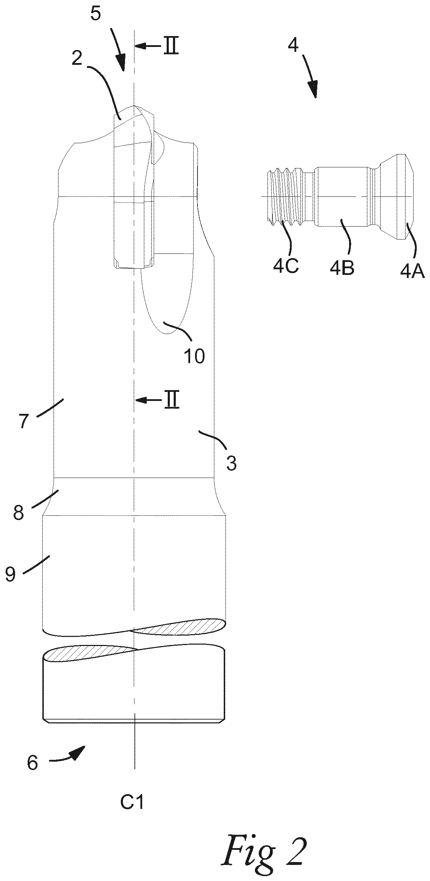

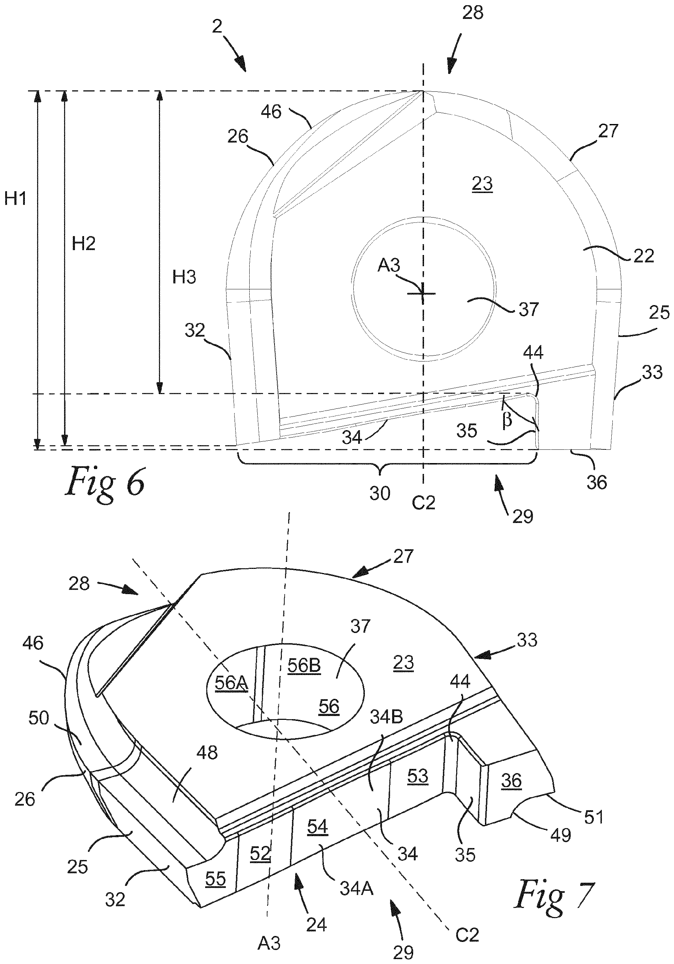

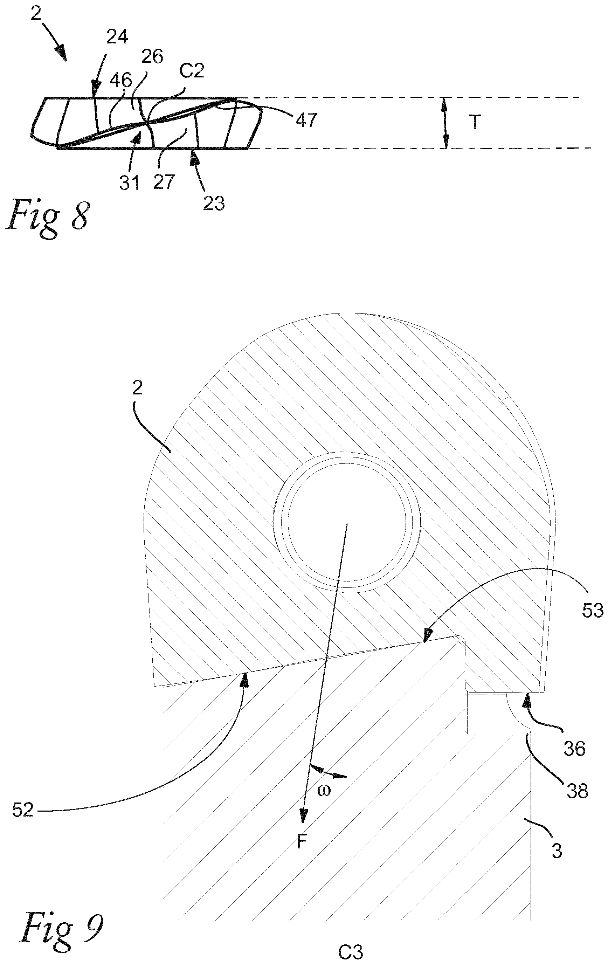

In Figs. 6-8, the ball nose end mill insert 2 of Fig. 1 and Fig. 2 is shown in more detail. The ball nose end mill insert 2 comprises an insert body 22 having an axial center axis C2. The ball nose end mill insert 2 has generally plate-like shape and includes two opposed substantially flat, i.e. planar, insert side surfaces 23, 24, i.e. a front insert side surface 23 and a rear insert side surface 24. Further, the ball nose end mill insert 2 comprises a peripheral surface 25 joining the two insert side surfaces 23, 24. The peripheral surface 25 includes two arcuate surfaces 26, 27 at a first axially forward end 28 of the insert 2 and an insert support surface 30 at a second axially rearward end 29 of the insert 2. The arcuate surfaces 26, 27 extend axially rearward from an axial center area 31 of the first axially forward end 28, i.e. from a surface portion centered around the axial center axis C2. The arcuate surfaces 26, 27 are positioned symmetrically on opposite sides in relation to the axial center area 31 of the insert 2. Thus, the arcuate surfaces 26, 27 are positioned symmetrically on opposite sides in relation to the axial center axis C2. The ball nose end mill insert 2 further comprises two cutting edges 46, 47 formed at the intersection of a respective arcuate surface 26, 27 and a chip control groove 48, 49 in the respective insert side surface 23, 24. Accordingly, a first cutting edge 46 is formed at the intersection of a first arcuate surface 26 and an outer portion 50 of the chip control groove 48 in the insert side surface 23, to the left of the insert center axis C2 in Fig 6-7. A second cutting edge 47 is formed at the intersection of a second arcuate surface 27 and an outer portion 51 of the chip control groove 49 in the insert side surface 24, as indicated to the right of the insert center axis C2 in Fig. 7 and in the top view of Fig. 8. Further, as can be seen in Fig. 8, the two cutting edges 46, 47 meet at the axial center of the insert, i.e. where the axial center axis C2 intersects the peripheral surface 25, which is the axially forwardmost point of the forward end 28 of the ball nose end mill insert 2.
The insert support surface 30 comprises an axial insert support surface 34 and a radial insert support surface 35. The axial insert support surface 34 extends generally transverse to and intersects the insert axial center axis C2 at a non-right angle. Further, the axial insert support surface 34 has surface portions 34A, 34B that, as seen in a front view, are located on opposite sides , i.e. both sides, of the insert axial center axis C2. The radial insert support surface 35 extends substantially in parallel with the insert axial center axis C2. The peripheral surface 25 further includes a transverse surface 36 at the axially rearward end 29 of the insert 2. The insert transverse surface 36 extends substantially perpendicular to the insert axial center axis C2.
Furthermore, the ball nose end mill insert 2 comprises peripheral side surfaces 32, 33 adjoining the arcuate surfaces 26, 27. More specifically, a first peripheral side surface 32, to the left of the insert axial center axis C2 in Fig. 6, connects arcuate surface 26 with the axial insert support surface 34, whereas a second peripheral side surface 33, to the right of the insert axial center axis C2 in Fig. 6, connects arcuate surface 27 with the transverse surface 36. The first and second peripheral side surfaces 32, 33 are inclined from the respective arcuate surfaces 26, 27 in a direction towards the insert axial center axis C2. The transverse surface 36 is, at its end opposite to the second peripheral side surface 33, also connected to the radial insert support surface 35. Thus, the transverse surface 36 is located in its entirety on one side of the insert axial center axis C2, i.e. to the right in Fig. 6. According to the illustrated embodiment the insert transverse surface 36 is the axially rearmost part of the ball nose end mill insert 2. In other words, the axial distance H1 between the axially forward end 28 and the insert transverse surface 36 is greater than the axial distance H2 between the axially forward end 28 and the intersection between the axial insert support surface 34 and the first peripheral side surface 32. According to another embodiment, not shown, the axial distance H1 is substantially equal to the axial distance H2. According to yet another embodiment, not shown, the axial distance H1 between the axially forward end 28 and the insert transverse surface 36 is shorter than the axial distance H2 between the axially forward end 28 and the intersection between the axial insert support surface 34 and the first peripheral side surface 32.

As illustrated in Fig. 6-7, the axial insert support surface 34 extends without interruption from the first peripheral side surface 32, visible to the left in Fig. 6, all the way across the insert axial center axis C2 to the radial insert support surface 35, which is in its entirety located to the right of the insert axial center axis C2 in Fig. 6. Accordingly, the axial insert support surface 34 is directly connected to the radial insert support surface 35, i.e. without any recesses, protrusions or other intermediate parts between these two insert support surfaces 34, 35. According to the illustrated embodiment the transition between the axial insert support surface 34 and the radial insert support surface 35 is an arcuate portion 44. According to another embodiment, not shown, this transition is a sharp edge. According to yet another embodiment, not shown, the transition is a beveled portion.

The axial insert support surface 34 and the radial insert support surface 35 together form an acute angle β. According to one embodiment the acute angle β is no larger than 88°. According to another embodiment the acute angle β is no larger than 85°. According to another embodiment the acute angle β is at least 70°. Preferably, the acute angle β, formed by the axial insert support surface 34 and the radial insert support surface 35, is substantially the same as the corresponding acute angle α, formed by the axial tool body support surface 19 and the radial tool body support surface 20. In the embodiment illustrated in Fig. 6-8, the acute angle β is 80°.

The acute angle β can be achieved in different ways by suitably arranging the axial insert support surface 34 and the radial insert support surface 35 based on user requirements. In the embodiment illustrated in Fig. 6-8, the radial insert support surface 35 is parallel to the insert axial center axis C2, whereas the axial insert support surface 34 extends generally transverse to, but not perpendicular to, the insert axial center axis C2. More specifically, the axial insert support surface 34 is inclined in an axially forward direction from the first peripheral side surface 32 to the radial insert support surface 35. In other words, the axial distance H2 between the forward end 28 and the intersection between the axial insert support surface 34 and the first peripheral side surface 32 is larger than the axial distance H3 between the forward end 28 and the transition between the axial insert support surface 34 and the radial insert support surface 35. Thus, as a result of the acute angle β, the axial insert support surface 34 and the radial insert support surface 35 face each other. More specifically, and as illustrated in front view in Fig. 6, the axial insert support surface 34 is facing downwards towards the right, whereas the radial insert support surface 35 is facing towards the left.

Further, the axial insert support surface 34 extends a major part of the insert support surface 30. In other words, the area of the axial insert support surface 34 is greater than the area of the remaining minor part of the insert support surface 30. In the embodiment as illustrated in Fig.6-8, the insert support surface 30 consists of the axial insert support surface 34 and the radial insert support surface 35. Accordingly, the area of the axial insert support surface 34 is greater than the area of the radial insert support surface 35. As apparent from Fig.6, the extension of the axial insert support surface 34 in a direction perpendicular to the insert center axis C2 is greater than the extension of the radial insert support surface 35 in a direction in parallel with the insert center axis C2. According to the illustrated embodiment the area of the transverse surface 36 is similar to, but not equal to, the area of the radial insert support surface 35. Furthermore, the transverse surface 36 is a substantially flat surface. According to another embodiment, not shown, the area of the transverse surface 36 is larger than the area of the radial insert support surface 35. According to yet another embodiment, not shown, the area of the transverse surface 36 is smaller than the area of the radial insert support surface 35.

According to one embodiment, not shown, the axial insert support surface 34 is a substantially flat surface, i.e. having a flat or planar configuration along its extension from the first peripheral side surface 32 to the radial insert support surface 35. In the embodiment as illustrated in Fig. 6-8, the axial insert support surface 34 is a curved, i.e. non-planar, surface defining two separate contact areas 52, 53, which are adapted to contact the axial tool body support surface 19, when the ball nose end mill insert 2 is secured in the ball nose end mill tool body 3. More specifically, the axial insert support surface 34 has a first contact area 52, to the left of insert center axis C2 in Fig.7, which is closer to the first peripheral side surface 32, and a second contact area 53, to the right of insert center axis C2 in Fig.7, which is closer to transverse surface 36 and is connected to the radial contact surface 35. Further, the axial insert support surface 34 has, along at least a part thereof, a generally concave configuration, such that a center portion 54 of the axial insert support surface 34, located between said two separate contact areas 52, 53 and intersecting the insert center axis C2, is in its entirety closer to the insert through hole 37 of the ball nose end mill insert 2 than the contact areas 52, 53. In this way, the center portion 54 of the axial insert support surface 34 will not contact the axial tool body support surface 19 when fastening the ball nose end mill insert 2 in the slot 11 of the ball nose end mill tool body 3. This is illustrated in Fig. 9, where a gap is present between the center portion 54 and the axial tool body support surface 19 and where only the contact areas 52, 53 of the axial insert support surface 34 are in contact with the axial tool body support surface 19. Further, as illustrated in Fig.7, the axial insert support surface 34 is curved such that a corner portion 55, between the first contact area 52 and the transition to the first peripheral side surface 32, is curved away from the first contact area 52 in a direction towards the forward end 28 of the insert 2, i.e. upwards in Fig. 6. Accordingly, the corner portion 55 of the axial insert support surface 34 will not contact the axial tool body support surface 19 when fastening the ball nose end mill insert 2 in the slot 11 of the ball nose end mill tool body 3. This is illustrated in Fig. 9, where a gap is present between the corner portion 55 and the axial tool body support surface 19. From Fig. 9 is also apparent that the transverse surface 36 will not contact the tool body 3, when the ball nose end mill insert 2 is fastened in the slot 11 of the ball nose end mill tool body 3. Thus, in assembled position, there is a gap between the transverse surface 36 of the insert 2 and the transverse slot surface 38 of the ball nose end mill tool body 3.

Further, the insert through hole 37 intersects said insert side surfaces 23, 24. The insert through hole 37 defines a center axis A3, which is substantially perpendicular to the insert axial center axis C2. The insert through hole 37 is adapted to receive the fastener 4, for fastening the ball nose end mill insert 2 in the slot 11 of the ball nose end mill tool body 3. Thus, the insert through hole 37 is sufficiently large to receive the fastener 4, i.e.at least parts 4B, 4C of the fastener 4. Also, the insert through hole 37 is configured to allow co-operation with at least a part 4B of the fastener, when fastening the ball nose end mill insert 2, so as to push the axial insert support surface 34 into contacting the axial tool body support surface 19 and the radial insert support surface 35 into contacting the radial tool body support surface 20.

According to the illustrated embodiment, the radial insert support surface 35 is a substantially flat surface, i.e. having a flat configuration along its extension from the axial insert support surface 34 to the transverse surface 36. According to another embodiment, not shown, the radial insert support surface 35 is a curved surface defining one or more separate contact areas.

As illustrated in fig 8, the ball nose end mill insert 2 has a thickness T, which is only slightly smaller than the width W1 of the slot 11. The thickness T as well as the width W1 can be configured based on user requirements. According to one embodiment the thickness T is larger than 1,5 mm, but no larger than 6 mm. According to another embodiment the thickness T is larger than 2 mm, but no larger than 5 mm. In the embodiment illustrated in Fig. 1-9, the thickness T is 3 mm. Further, according to one embodiment the width W1 is no more than 20 µm larger than the thickness T. According to another embodiment the width W1 is no more than 10 µm larger than the thickness T.

In an assembled position of the ball nose end mill 1, as illustrated in Fig. 1, the ball nose end mill insert 2 is received in the slot 11 of the tool body 3, while the insert center axis C2 is aligned with the tool body center axis C3. Further, the insert through hole 37 is aligned with the tool body through hole 40 and the fastener 4 extends through the tool body through hole 40 and the insert through hole 37 while securing the insert 2 to the tool body 3, such that the axial insert support surface 34 contacts the axial tool body surface 19 and the radial insert support surface 35 contacts the radial tool body support surface 20. Further, in the assembled position as illustrated in Fig. 1, and also visible in Fig. 9, the ball nose end mill insert 2 constitutes the side periphery and front periphery of the ball nose end mill 1. Thus, the distance between the insert peripheral side surfaces 32, 33 in a direction perpendicular to the ball nose end mill center axis C1 is greater than the diameter of the forward tool body section 7. Also, in the assembled position the forward end portion 28 of the insert 2 is located axially in front of the tool body forward end portion 12.

According to the embodiment illustrated in Fig. 1-9, the tool body through hole 40 and the insert through hole 37 are arranged to achieve an advantageous fastening of the insert 2 in the tool body 3. The tool body through hole portions 41, 42 are aligned and thus have a common hole center axis A1. However, the center axis A2 of the countersunk portion 43 of the front tool body through hole portion 43 is slightly offset in relation to the center axis A1. In other words, the two center axes A1, A2 are not completely aligned. In the illustrated embodiment, the center axis A2 of the countersunk portion 43 is parallel to but displaced in relation to the center axis A1 of the tool body through hole portions 41, 42. In Fig.3 the position of the center axis A2 of the countersunk portion 43 is displaced in a downward left direction in relation the tool body through hole portions 41, 42. This is also illustrated in exaggerated dimensions in Fig. 4, where the position of the countersunk portion axis A2 is below, or axially rearward of, the position of the hole portion axes A1. The offset between the two axes A1, A2 can be selected based on user requirements. According to one embodiment the offset, i.e. the shortest distance, between these two axes A1 and A2 is no larger than 0,2 mm. According to another embodiment the offset between the two axes A1, A2 is at least 0,1mm. In the embodiment illustrated in Fig. 1-9, the offset between the two axes A1, A2 is 0,15 mm. Further, according to one embodiment, the offset is selected so as to achieve, upon tightening the fastener 4, a resulting fastening force F pressing the insert 2 against the tool body 3 in a downward left direction as illustrated in Fig. 9, at an angle ω in relation to the tool body axial center axis C3. In the embodiment illustrated the angle ω is 10°. This angle has proven efficient in obtaining a reliable fastening of the insert 2 in the slot 11 of the tool body 3. However, positive effects have been observed for other values of the angle ω, including values larger than 10° and values smaller than 10°.

When positioning the insert 2 in the slot 11, the insert through hole center axis A3 is aligned with the tool body through hole 40 and thus parallel to the center axis A1 of the front and rear tool body through hole portions 42, 41. When fastening the ball nose end mill insert 2 in the slot 11, the fastener 4 will be inserted firstly through the front tool body through hole portion 42, secondly through the insert through hole 37 and thirdly into the rear tool body through hole portion 41, such that the male thread of the threaded portion 4C engages the female thread of the rear tool body through hole portion 41. Due to the center axis A2 of the countersunk portion being offset in relation to the center axis A1 of the through hole portions 41, 42, the fastener will be somewhat inclined, i.e. not completely in parallel with the insert through hole center axis A3, when tightening the fastener and the head portion 4A of the fastener engaging the countersunk portion 43. Accordingly, upon tightening the fastener 4, the shank portion 4B of the fastener will contact the surface 56 of the insert through hole 37, thereby simultaneously pressing the axial insert support surface 34 with its contact areas 52, 53 against the axial tool body support surface 19 and the radial insert support surface 35 against the radial tool body support surface 20. According to one embodiment and as illustrated in Fig. 7, the insert through hole 37 is not perfectly circular cylindrical, i.e. the surface 56 is not a true circular cylindrical surface. Rather, the insert through hole 37 is somewhat oval, such that the insert through hole 37 diameter is somewhat larger in a direction generally transverse to, i.e. substantially perpendicular to, the insert center axis C2 than the diameter of that the insert through hole 37 in a direction parallel to the insert center axis C2. More specifically, the surface 56 of the insert through hole 37 includes two partial surfaces 56A, 56B, each having circular cylindrical configuration. These two partial surfaces 56A, 56B together give the insert through hole 37 its oval shape, which enables the fastener 4 to only contact an axially rear portion of the surface 56 during tightening of the fastener 4. In this way, the positioning of the ball nose end mill insert 2 in a sideways direction, i.e. in the radial direction or a direction generally transverse to the axial center axis C3 of the ball nose end mill tool body 3, is predominantly controlled by the interaction of the tool body support surface 18 and the insert support surface 30 and not so much controlled by the interaction between the fastener shank portion 4B and the surface 56 of the insert through hole 37. According to another embodiment not shown, the insert through hole 37 is substantially circular cylindrical.

As apparent from the above description with reference to Fig. 1-9, firstly, the ball nose end mill insert 2 has features at the forward end 28 being arranged symmetrically in relation to the center axis C2 or the axial center area 31. For example, arcuate surfaces 26, 27 extend axially rearward from an axial center area 31 of the first axially forward end 28 and are positioned symmetrically on opposite sides in relation to the axial center area 31 of the insert 2. Secondly, the ball nose end mill insert 2 has other features at the rear end 29 being arranged asymmetrically in relation to the center axis C2. Specifically, the overall configuration of the peripheral surface 25 at the rear end 29 is asymmetric in relation to the center axis C2. Also, the insert support surface 30 is asymmetric in relation to the center axis C2.

In a corresponding way, the ball nose end mill tool body 3 has features of its forward tool body section 7 being arranged asymmetrically in relation to the center axis C3 of the tool body 3. Specifically, the overall configuration of the tool body support surface 18 is asymmetric in relation to the tool body center axis C3.

When assembled, the ball nose end mill 1 is particularly well suited for carrying out profile milling operations, in which a form is generated in a workpiece, not shown, by rotating the ball nose end mill 1 around its center axis C1 and feeding the ball nose end mill 1 generally transverse to said center axis C1 such that the ball nose end mill insert comes into material removing engagement with the workpiece, normally using a depth of cut D_{C} being smaller than 1 mm. Accordingly, the ball nose end mill 1 is particularly well suited for finishing operations.

The dimensions of the ball nose end mill as described above can be configured based on user requirements. For example, the total length of the ball nose end mill 1 in its assembled state may be 90 mm or larger, but normally not larger than 300 mm. Examples of diameters of the ball nose end mill tool body 3 include diameters from 6 mm to 50 mm. Further, the relationship between tool body diameter d and total length L is preferably configured such that L/d is at least 6 but not more than 20.

The invention is not limited to the embodiments disclosed, but may be varied and modified within the scope of the following claims.

Although the ball nose end mill according to the above-described embodiments has been described without means for directing a fluid, such as coolant, towards the cutting zone, i.e. the active part of the cutting edges, the ball nose end mill is also suitable for use together with such fluid directing means. Such fluid directing means may be external, for example a fluid supply tube spaced apart from the ball nose end mill, or internal. In the case of internal fluid directing means, such means may comprise one or more fluid supply channels in the ball nose end mill tool body. Further, such internal fluid directing means may comprise fluid supply channels arranged on the ball nose end mill insert side surfaces 23, 24, and/or arranged on the ball nose end mill tool body internal side surfaces 16, 17, which are otherwise of generally flat configuration. Moreover, while the ball nose end mill tool body according to the above-described embodiments has been described as a one piece tool body, according to other conceivable embodiments the ball nose end mill tool body includes two tool body parts, where a forward tool body part, in which the slot is situated, is detachably mounted to a rear tool body part, for example via a threaded connection.

Further, the ball nose end mill insert may be configured with additional and/or other chip control or chip breaking geometries.

Additionally, other types of fasteners, such as differently configured fastening screws, or even clamping members are conceivable.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward" and "rear" refer to features as shown in the current drawings and as perceived by the skilled person.

## Claims

1. A ball nose end mill insert (2) comprising
an insert body (22) having an axial center axis (C2),
two opposed substantially flat insert side surfaces (23, 24),
a peripheral surface (25) joining the two insert side surfaces (23, 24), the peripheral surface (25) including two arcuate surfaces (26, 27) at a first axially forward end (28) of the insert and an insert support surface (30) at a second axially rearward end (29) of the insert, the arcuate surfaces (26, 27) extending axially rearward from an axial center area (31) of the first axially forward end (28) and being positioned symmetrically on opposite sides in relation to the axial center area (31) of the insert,
peripheral side surfaces (32, 33) adjoining the arcuate surfaces (26, 27),
an insert through hole (37) intersecting said insert side surfaces (23, 24),
said insert support surface (30) comprising an axial insert support surface (34) having surface portions (34A, 34B) that, as seen in a front view, are located on opposite sides of the axial center axis (C2) of the insert, and a radial insert support surface (35),
**characterized in that**
said axial insert support surface (34) and said radial insert support surface (35) together form an acute angle (β).

2. A ball nose end mill insert according to claim 1, **characterized in that** said acute angle (β) is no larger than 88°.

3. A ball nose end mill insert according to claim 2, **characterized in that** said acute angle (β) is no larger than 85°.

4. A ball nose end mill insert according to any of the preceding claims, **characterized in that** said acute angle (β) is at least 70°.

5. A ball nose end mill insert according to any of the preceding claims, **characterized in that** the axial insert support surface (34) is a substantially flat surface.

6. A ball nose end mill insert according to any of the claims 1-4, **characterized in that** the axial insert support surface (34) is a curved surface defining at least two separate contact areas (52, 53).

7. A ball nose end mill insert according to any of the preceding claims, **characterized in that** said axial insert support surface (34) is directly connected to said radial insert support surface (35).

8. A ball nose end mill insert according to any of the preceding claims, **characterized in that** said axial insert support surface (34) extends a major part of said insert support surface (30).

9. A ball nose end mill insert according to any of the preceding claims, **characterized in that** said axial insert support surface (34) extends from a first peripheral side surface (32) to the radial insert support surface (35).

10. A ball nose end mill insert according to any of the preceding claims, **characterized in that** said radial insert support surface (35) is parallel to said axial center axis (C2).

11. A ball nose end mill insert according to any of the preceding claims, **characterized in that** said peripheral surface (25) comprises a transverse surface (36) connecting said radial insert support surface (35) and one of said peripheral side surfaces (33).

12. A ball nose end mill insert according to any of the preceding claims, **characterized in that** said insert support surface (30) consists of said axial insert support surface (34) and said radial insert support surface (35).

13. A ball nose end mill insert according to any of the preceding claims, **characterized in that** it further comprises two cutting edges (46, 47) formed at an intersection of a respective arcuate surface (26, 27) and a chip control groove (48, 49) in the respective insert side surface (23, 24).

14. A ball nose end mill tool body (3) for receiving a ball nose end mill insert (2) according to any of claims 1-13,
said tool body (3) having generally elongate shape and being rotatable around an axial center axis (C3), said axial center axis extending in a longitudinal direction of said tool body,
said tool body (3) comprising
a slot (11) for receiving said insert (2), said slot (11) intersecting a forward end portion (12) of said tool body and intersecting an envelope surface (13) of said tool body on two opposite sides of said axial center axis (C3), said slot (11) comprising two opposed substantially flat internal tool body side surfaces (16, 17) facing each other and an axially rear tool body support surface (18) for contacting a corresponding insert support surface (30), said tool body support surface (18) comprising an axial tool body support surface (19) having surface portions (19A, 19B) that, as seen in a longitudinal cross section along said slot (11), are located on opposite sides of the axial center axis (C3) of the tool body and a radial tool body support surface (20), and
a transverse tool body through hole (40) intersecting said envelope surface (13) and said internal tool body side surfaces (16, 17), said tool body through hole (40) being adapted to be aligned with the insert through hole (37) and to receive a fastener (4) for fastening the insert (2) in the tool body (3),
**characterized in that**
said axial tool body support surface (19) and said radial tool body support surface (20) together form an acute angle (α).

15. A ball nose end mill tool body according to claim 14, **characterized in that** said acute angle (α) is no larger than 88°.

16. A ball nose end mill tool body according to claim 15, **characterized in that** said acute angle (α) is no larger than 85°.

17. A ball nose end mill tool body according to any of the claims 14-16, **characterized in that** said acute angle (α) is at least 70°.

18. A ball nose end mill tool body according to any of the claims 14-17, **characterized in that** said axial tool body support surface (19) is directly connected to said radial tool body support surface (20).

19. A ball nose end mill tool body according to any of the claims 14-18, **characterized in that** said axial tool body support surface (19) extends a major part of said tool body support surface (18).

20. A ball nose end mill tool body according to any of the claims 14-19, **characterized in that** said axial tool body support surface (19) extends from the envelope surface (13) to the radial tool body support surface (20).

21. A ball nose end mill tool body according to any of the claims 14-20, **characterized in that** said radial tool body support surface (20) is parallel to the axial center axis (C3) of the tool body.

22. A ball nose end mill tool body according to any of the claims 14-21, **characterized in that** said slot (11) comprises a transverse slot surface (38) connecting said radial tool body support surface (20) and said envelope surface (13).

23. A ball nose end mill tool body according to claim 22, **characterized in that** said tool body support surface (18) consists of said axial tool body support surface (19) and said radial tool body support surface (20).

24. A ball nose end mill (1), comprising
a ball nose end mill insert (2) according to any of claims 1-13,
a ball nose end mill tool body (3) according to any of the claims 14-23, and a fastener (4), wherein,
in an assembled position,
said insert (2) being received in the slot (11) of said tool body (3),
the insert center axis (C2) being aligned with the tool body center axis (C3),
the insert through hole (37) being aligned with the tool body through hole (40),
the fastener (4) extending through the tool body through hole (40) and the insert through hole (37) while securing the insert to the tool body,
the axial insert support surface (34) contacting the axial tool body support surface (19) and the radial insert support surface (35) contacting the radial tool body support surface (20).

## Patentansprüche

1. Einsatz (2) für einen Kugelkopffräser, welcher aufweist:
einen Einsatzkörper (22), der eine axiale, zentrale Achse (C2) hat,
zwei entgegengesetzt liegende, im Wesentlichen ebene Einsatzseitenflächen (23, 24), eine Umfangsfläche (25), welche die beiden Seitenflächen (23, 24) des Einsatzes miteinander verbindet, wobei die umlaufende Fläche (25) zwei bogenförmige Flächen (26, 27) an einem axial vorne liegenden Ende (28) des Einsatzes aufweist, und mit einer Stützfläche (30) des Einsatzes an einem zweiten, axial hinten liegenden Ende (29) des Einsatzes, wobei die bogenförmigen Flächen (26, 27) sich von einem axial zentralen Bereich (21) des ersten axial vorne liegenden Endes (28) axial nach hinten erstrecken und bezüglich des axial zentralen Bereiches (31) des Einsatzes symmetrisch angeordnet sind,
Seitenflächen (32, 33) am Umfang, welche an die bogenförmigen Flächen (26, 27) anschließen,
eine Durchgangsbohrung (37) des Einsatzes, welche die Seitenflächen (23, 24) des Einsatzes schneidet,
wobei die Stützfläche (30) des Einsatzes eine den Einsatz stützende, axiale Fläche (34) aufweist, welche Flächenbereiche (34A, 34B) hat, die in einer Ansicht von vorn auf entgegengesetzten Seiten der axialen, zentralen Achse (C2) des Einsatzes liegen, und eine radiale, den Einsatz stützende Fläche (35) aufweist,
**dadurch gekennzeichnet, dass**
die den Einsatz stützende axiale Fläche (34) und die den Einsatz stützende radiale Fläche (35) gemeinsam einen spitzen Winkel (β) bilden.

2. Einsatz für einen Kugelkopffräser nach Anspruch 1, **dadurch gekennzeichnet, dass** der spitze Winkel (β) nicht größer als 88° ist.

3. Einsatz für einen Kugelkopffräser nach Anspruch 2, **dadurch gekennzeichnet, dass** der spitze Winkel (β) nicht größer als 85° ist.

4. Einsatz für einen Kugelkopffräser nach einem der vorstehenden Ansprüche, **dadurch gekennzeichnet, dass** der spitze Winkel (β) zumindest 70° beträgt.

5. Einsatz für einen Kugelkopffräser nach einem der vorstehenden Ansprüche, **dadurch gekennzeichnet, dass** die den Einsatz stützende axiale Fläche (34) eine im Wesentlichen ebene Fläche ist.

6. Einsatz für einen Kugelkopffräser nach einem der Ansprüche 1-4, **dadurch gekennzeichnet, dass** die den Einsatz stützende axiale Fläche (34) eine gekrümmte Fläche ist, welche zumindest zwei getrennte Kontaktbereiche (52, 53) definiert.

7. Einsatz für einen Kugelkopffräser nach einem der vorstehenden Ansprüche, **dadurch gekennzeichnet, dass** die den Einsatz stützende axiale Fläche (34) mit der den Einsatz stützenden radialen Fläche (35) direkt verbunden ist.

8. Einsatz für einen Kugelkopffräser nach einem der vorstehenden Ansprüche, **dadurch gekennzeichnet, dass** die den Einsatz stützende axiale Fläche (34) sich über einen großen Teil der den Einsatz stützenden Fläche (30) hinweg erstreckt.

9. Einsatz für einen Kugelkopffräser nach einem der vorstehenden Ansprüche, **dadurch gekennzeichnet, dass** die den Einsatz stützende axiale Fläche (34) sich von einer ersten Umfangsseitenfläche (32) zu der den Einsatz stützenden radialen Fläche (35) erstreckt.

10. Einsatz für einen Kugelkopffräser nach einem der vorstehenden Ansprüche, **dadurch gekennzeichnet, dass** die den Einsatz stützende radiale Fläche (35) parallel zu der zentralen axialen Achse (C2) verläuft.

11. Einsatz für einen Kugelkopffräser nach einem der vorstehenden Ansprüche, **dadurch gekennzeichnet, dass** die Umfangsfläche (24) eine Querfläche (36) aufweist, welche die den Einsatz stützende, radiale Fläche (35) und eine der Umfangsseitenflächen (33) miteinander verbindet.

12. Einsatz für einen Kugelkopffräser nach einem der vorstehenden Ansprüche, **dadurch gekennzeichnet, dass** die den Einsatz stützende Fläche (30) aus der axialen, den Einsatz stützenden Fläche (34) und der den Einsatz stützenden radialen Fläche (35) besteht.

13. Einsatz für einen Kugelkopffräser nach einem der vorstehenden Ansprüche, **dadurch gekennzeichnet, dass** er weiterhin zwei Schneidkanten (46, 47) aufweist, die an der Schnittlinie einer entsprechenden bogenförmigen Fläche (26, 27) und einer Spanführungsnut (48, 49) in der jeweiligen Seitenfläche (23, 24) des Einsatzes gebildet wird.

14. Werkzeugkörper (3) für einen Kugelkopffräserfürdie Aufnahme eines Einsatzes (2) für einen Kugelkopffräser nach einem der Ansprüche 1-13,
wobei der Werkzeugkörper (3) eine in etwa längliche Form hat und um eine axial verlaufende, zentrale Achse (C3) drehbar ist, wobei die axiale zentrale Achse sich in einer Längsrichtung des Werkzeugkörpers erstreckt,
wobei der Werkzeugkörper (3) aufweist:
einen Schlitz (11) für die Aufnahme des Einsatzes (2), wobei der Schlitz eine Hüllfläche (13) des Werkzeugkörpers auf zwei entgegengesetzten Seiten der axialen zentralen Achse (C3) schneidet, wobei der Schlitz (11) zwei entgegengesetzt liegende im Wesentlichen ebene, innere Seitenflächen (16, 17) des Werkzeugkörpers aufweist, die einander zugewandt sind, und eine axial hintere, den Werkzeugkörper stützende Fläche (18) aufweist, um mit einer entsprechenden, den Einsatz stützenden Fläche (30) in Kontakt zu kommen, wobei die Stützfläche (18) des Werkzeugkörpers eine axiale, den Werkzeugkörper stützende Fläche (19) hat, welche Oberflächenbereiche (19A, 19 B) hat, die in einem Längsschnitt entlang des Schlitzes gesehen auf gegenüberliegenden Seiten bezüglich der axialen, zentralen Achse (C3) des Werkzeugkörpers und einer radialen Stützfläche (20) des Werkzeugkörpers liegen, und
eine quer verlaufende Durchgangsbohrung (40) durch den Werkzeugkörper, welche die Hüllfläche (13) und die inneren Seitenflächen (16, 17) des innenliegenden Werkzeugkörpers schneidet, wobei die Durchgangsbohrung (40) des Werkzeugkörpers dafür ausgelegt ist, mit der Durchgangsbohrung (37) des Einsatzes ausgerichtet zu werden und ein Befestigungselement (4) zum Befestigen des Einsatzes (2) in dem Werkzeugkörper (3) aufzunehmen,
**dadurch gekennzeichnet dass**
die axiale, den Werkzeugkörper stützende Fläche (19) und die radiale, den Werkzeugkörper stützende Fläche (20) gemeinsam einen spitzen Winkel (α) bilden.

15. Werkzeugkörper eines Kugelkopffräsers nach Anspruch 14, **dadurch gekennzeichnet, dass** der spitze Winkel (α) nicht größer als 88° ist.

16. Werkzeugkörper eines Kugelkopffräsers nach Anspruch 15, **dadurch gekennzeichnet, dass** der spitze Winkel (α) nicht größer als 85° ist.

17. Werkzeugkörper für einen Kugelkopffräser nach einem der Ansprüche 14-16, **dadurch gekennzeichnet, dass** der spitze Winkel (α) zumindest 70° beträgt.

18. Werkzeugkörper für einen Kugelkopffräser nach einem der Ansprüche 14-17, **dadurch gekennzeichnet, dass** die axiale, den Werkzeugkörper stützende Fläche (19) unmittelbar mit der den Werkzeugkörper stützenden radialen Fläche (20) verbunden ist.

19. Werkzeugkörper eines Kugelkopffräsers nach einem der Ansprüche 14-18, **dadurch gekennzeichnet, dass** die axiale, den Werkzeugkörper stützende Fläche (19) sich über einen größeren Teil der Stützfläche (18) des Werkzeugkörpers erstreckt.

20. Werkzeugkörper eines Kugelkopffräsers nach einem der Ansprüche 14-19, **dadurch gekennzeichnet, dass** die axiale, den Werkzeugkörper stützende Fläche (19) sich von der Hüllfläche (13) zu der radialen, den Werkzeugkörper stützenden Fläche (20) erstreckt.

21. Werkzeugkörper eines Kugelkopffräsers nach einem der Ansprüche 14-20, **dadurch gekennzeichnet, dass** die radiale, den Werkzeugkörper stützende Fläche (20) parallel zu der axial zentralen Achse (C3) des Werkzeugkörpers verläuft.

22. Werkzeugkörper eines Kugelkopffräsers nach einem der Ansprüche 14-21, **dadurch gekennzeichnet, dass** der Schlitz (11) eine quer verlaufende Stützfläche (38) aufweist, welche die radiale, den Werkzeugkörper stützende Fläche (20) und die Hüllfläche (13) miteinander verbindet.

23. Werkzeugkörper eines Kugelkopffräsers nach Anspruch 22, **dadurch gekennzeichnet, dass** die den Werkzeugkörper stützende Fläche (18) aus der den Werkzeugkörper stützenden axialen Fläche (19) und der den Werkzeugkörper stützenden radialen Fläche (20) besteht.

24. Kugelkopffräser (1), welcher aufweist:
einen Einsatz (2) für einen Kugelkopffräser nach einem der Ansprüche 1-13,
einen Werkzeugkörper (3) eines Kugelkopffräsers nach einem der Ansprüche 14-23 und ein Befestigungselement (4), wobei
in einem zusammen montierten Zustand
der Einsatz (2) in dem Schlitz (11) des Werkzeugkörpers (3) aufgenommen ist, wobei die zentrale Achse (C2) des Einsatzes mit der zentralen Achse (C3) des Werkzeugkörpers ausgerichtet ist,
die Durchgangsbohrung (37) des Einsatzes mit der Durchgangsbohrung (40) des Werkzeugkörpers ausgerichtet ist,
das Befestigungselement (4) sich durch die Durchgangsbohrung (40) des Werkzeugkörpers und die Durchgangsbohrung (37) des Einsatzes erstreckt, wobei sie den Einsatz an dem Werkzeugkörper sichert,
wobei die axiale, den Einsatz stützende Fläche (34) mit der axialen Stützfläche (19) des Werkzeugkörpers in Kontakt steht und die radiale, den Einsatz stützende Fläche (35) mit der radialen Stützfläche (20) des Werkzeugkörpers in Kontakt steht.

## Revendications

1. Plaquette de coupe pour fraise à bout sphérique (2) comprenant
un corps de plaquette (22) présentant un axe central axial (C2),
deux surfaces latérales de plaquette sensiblement planes opposées (23, 24),
une surface périphérique (25) reliant les deux surfaces latérales de plaquette (23, 24), la surface périphérique (25) incluant deux surfaces courbes (26, 27) au niveau d'une première extrémité axialement vers l'avant (28) de la plaquette et une surface de support de plaquette (30) au niveau d'une seconde extrémité axialement vers l'arrière (29) de la plaquette, les surfaces courbes (26, 27) s'étendant axialement vers l'arrière depuis une zone centrale axiale (31) de la première extrémité axialement vers l'avant (28) et étant positionnées de manière symétrique sur des côtés opposés par rapport à la zone centrale axiale (31) de la plaquette,
des surfaces latérales périphériques (32, 33) étant contiguës aux surfaces courbes (26, 27),
un trou traversant de plaquette (37) coupant lesdites surfaces latérales de plaquette (23, 24),
ladite surface de support de plaquette (30) comprenant une surface de support de plaquette axiale (34) présentant des parties de surface (34A, 34B) qui, lorsqu'elles sont observées selon une vue de face, sont situées sur des côtés opposés de l'axe central axial (C2) de la plaquette, et une surface de support de plaquette radiale (35),
**caractérisée en ce que**
ladite surface de support de plaquette axiale (34) et ladite surface de support de plaquette radiale (35) forment ensemble un angle aigu (β).

2. Plaquette de coupe pour fraise à bout sphérique selon la revendication 1, **caractérisée en ce que** ledit angle aigu (β) n'est pas supérieur à 88°.

3. Plaquette de coupe pour fraise à bout sphérique selon la revendication 2, **caractérisée en ce que** ledit angle aigu (β) n'est pas supérieur à 85°.

4. Plaquette de coupe pour fraise à bout sphérique selon l'une quelconque des revendications précédentes, **caractérisée en ce que** ledit angle aigu (β) est au moins égal à 70°.

5. Plaquette de coupe pour fraise à bout sphérique selon l'une quelconque des revendications précédentes, **caractérisée en ce que** la surface de support de plaquette axiale (34) est une surface sensiblement plane.

6. Plaquette de coupe pour fraise à bout sphérique selon l'une quelconque des revendications 1 à 4, **caractérisée en ce que** la surface de support de plaquette axiale (34) est une surface courbe définissant au moins deux zones de contact distinctes (52, 53).

7. Plaquette de coupe pour fraise à bout sphérique selon l'une quelconque des revendications précédentes, **caractérisée en ce que** ladite surface de support de plaquette axiale (34) est directement reliée à ladite surface de support de plaquette radiale (35).

8. Plaquette de coupe pour fraise à bout sphérique selon l'une quelconque des revendications précédentes, **caractérisée en ce que** ladite surface de support de plaquette axiale (34) s'étend sur une majeure partie de ladite surface de support de plaquette (30).

9. Plaquette de coupe pour fraise à bout sphérique selon l'une quelconque des revendications précédentes, **caractérisée en ce que** ladite surface de support de plaquette axiale (34) s'étend depuis une première surface latérale périphérique (32) jusqu'à la surface de support de plaquette radiale (35).

10. Plaquette de coupe pour fraise à bout sphérique selon l'une quelconque des revendications précédentes, **caractérisée en ce que** ladite surface de support de plaquette radiale (35) est parallèle audit axe central axial (C2).

11. Plaquette de coupe pour fraise à bout sphérique selon l'une quelconque des revendications précédentes, **caractérisée en ce que** ladite surface périphérique (25) comprend une surface transversale (36) reliant ladite surface de support de plaquette radiale (35) et l'une desdites surfaces latérales périphériques (33).

12. Plaquette de coupe pour fraise à bout sphérique selon l'une quelconque des revendications précédentes, **caractérisée en ce que** ladite surface de support de plaquette (30) se compose de ladite surface de support de plaquette axiale (34) et de ladite surface de support de plaquette radiale (35).

13. Plaquette de coupe pour fraise à bout sphérique selon l'une quelconque des revendications précédentes, **caractérisée en ce qu'**elle comprend en outre deux arêtes de coupe (46, 47) formées à une intersection d'une surface courbe respective (26, 27) et d'une rainure de gestion de copeaux (48, 49) dans la surface latérale de plaquette respective (23, 24).

14. Corps d'outil de fraise à bout sphérique (3) destiné à recevoir une plaquette de coupe pour fraise à bout sphérique (2) selon l'une quelconque des revendications 1 à 13, ledit corps d'outil (3) présentant une forme globalement allongée et pouvant être entraîné en rotation autour d'un axe central axial (C3), ledit axe central axial s'étendant selon une direction longitudinale dudit corps d'outil,
ledit corps d'outil (3) comprenant
une fente (11) destinée à recevoir ladite plaquette (2), ladite fente (11) coupant une partie d'extrémité vers l'avant (12) dudit corps d'outil et coupant une surface d'enveloppe (13) dudit corps d'outil sur deux côtés opposés dudit axe central axial (C3), ladite fente (11) comprenant deux surfaces latérales de corps d'outil internes sensiblement planes opposées (16, 17) se faisant face et une surface de support de corps d'outil axialement arrière (18) destinée à être en contact avec une surface de support de plaquette correspondante (30), ladite surface de support de corps d'outil (18) comprenant une surface de support de corps d'outil axiale (19) présentant des parties de surface (19A, 19B) qui, lorsqu'elles sont observées en coupe transversale longitudinale le long de ladite fente (11), sont situées sur des côtés opposés de l'axe central axial (C3) du corps d'outil et une surface de support de corps d'outil radiale (20), et
un trou traversant de corps d'outil transversal (40) coupant ladite surface d'enveloppe (13) et lesdites surfaces latérales de corps d'outil internes (16, 17), ledit trou traversant de corps d'outil (40) étant conçu pour être aligné sur le trou traversant de plaquette (37) et pour recevoir une fixation (4) destinée à fixer la plaquette (2) dans le corps d'outil (3),
**caractérisé en ce que**
ladite surface de support de corps d'outil axiale (19) et ladite surface de support de corps d'outil radiale (20) forment ensemble un angle aigu (α).

15. Corps d'outil de fraise à bout sphérique selon la revendication 14, **caractérisé en ce que** ledit angle aigu (α) n'est pas supérieur à 88°.

16. Corps d'outil de fraise à bout sphérique selon la revendication 15, **caractérisé en ce que** ledit angle aigu (α) n'est pas supérieur à 85°.

17. Corps d'outil de fraise à bout sphérique selon l'une quelconque des revendications 14 à 16, **caractérisé en ce que** ledit angle aigu (α) est au moins égal à 70°.

18. Corps d'outil de fraise à bout sphérique selon l'une quelconque des revendications 14 à 17, **caractérisé en ce que** ladite surface de support de corps d'outil axiale (19) est directement reliée à ladite surface de support de corps d'outil radiale (20).

19. Corps d'outil de fraise à bout sphérique selon l'une quelconque des revendications 14 à 18, **caractérisé en ce que** ladite surface de support de corps d'outil axiale (19) s'étend sur une majeure partie de ladite surface de support de corps d'outil (18).

20. Corps d'outil de fraise à bout sphérique selon l'une quelconque des revendications 14 à 19, **caractérisé en ce que** ladite surface de support de corps d'outil axiale (19) s'étend depuis la surface d'enveloppe (13) jusqu'à la surface de support de corps d'outil radiale (20).

21. Corps d'outil de fraise à bout sphérique selon l'une quelconque des revendications 14 à 20, **caractérisé en ce que** ladite surface de support de corps d'outil radiale (20) est parallèle à l'axe central axial (C3) du corps d'outil.

22. Corps d'outil de fraise à bout sphérique selon l'une quelconque des revendications 14 à 21, **caractérisé en ce que** ladite fente (11) comprend une surface de fente transversale (38) reliant ladite surface de support de corps d'outil radiale (20) et ladite surface d'enveloppe (13).

23. Corps d'outil de fraise à bout sphérique selon la revendication 22, **caractérisé en ce que** ladite surface de support de corps d'outil (18) se compose de ladite surface de support de corps d'outil axiale (19) et de ladite surface de support de corps d'outil radiale (20).

24. Fraise à bout sphérique (1), comprenant
une plaquette pour fraise à bout sphérique (2) selon l'une quelconque des revendications 1 à 13,
un corps d'outil de fraise à bout sphérique (3) selon l'une quelconque des revendications 14 à 23, et une fixation (4), où,
dans une position assemblée,
ladite plaquette (2) étant reçue dans la fente (11) dudit corps d'outil (3),
l'axe central de plaquette (C2) étant aligné sur l'axe central de corps d'outil (C3), le trou traversant de plaquette (37) étant aligné sur le trou traversant de corps d'outil (40),
la fixation (4) s'étendant à travers le trou traversant de corps d'outil (40) et le trou traversant de plaquette (37) en fixant la plaquette au corps d'outil,
la surface de support de plaquette axiale (34) étant en contact avec la surface de support de corps d'outil axiale (19) et la surface de support de plaquette radiale (35) étant en contact avec la surface de support de corps d'outil radiale (20).
